# EUROPEAN PATENT APPLICATION

(11) **EP 4 637 212 A1**
(43) Date of publication of application: **22.10.2025**
(21) Application number: 23932788.5
(22) Date of filing: 16.11.2023
(51) Int. Cl.: H04W 40/02

(54) **COMMUNICATION METHOD AND APPARATUS**

(30) Priority: 10.04.2023 CN 202310413834
(71) Applicant: Honor Device Co., Ltd., Shenzhen, Guangdong 518040 (CN)
(72) Inventor: PANG, Gaokun, Shenzhen, Guangdong 518040 (CN)
(74) Representative: Thun, Clemens
(86) International application number: PCT/CN2023/132112
(87) International publication number: WO 2024/212517

(57) **Abstract**

A communication method and apparatus relate to the field of communication technologies. A terminal device side data stream category can be added based on a traffic category indicated by an application, to reflect a terminal device side service, thereby improving performance of a communication system. The method includes: obtaining, by a terminal device, a user equipment route selection policy URSP rule, where the URSP rule includes a plurality of traffic categories, and the plurality of traffic categories include one or more terminal device side data stream categories; obtaining first data, where the first data is data processed by a terminal device; determining the terminal device side data stream category associated with the first data based on the traffic category; and transmitting the first data on a session that supports the terminal device side data stream category.

## Description

This application claims priority to Chinese Patent Application No. 202310413834.4, filed with the China National Intellectual Property Administration on April 10, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a communication system, communication requirements of various communication services may differ greatly. Network resources may be flexibly allocated and networking may be performed as required, to virtually create, on a same set of physical facilities, a plurality of network slices with different characteristics and isolated from each other, thereby satisfying communication requirements of different services.

During service transmission, the terminal device may determine a traffic category of to-be-transmitted data based on the to-be-transmitted data, to match an appropriate user equipment route selection policy (user equipment route selection policy, URSP) rule for communication. For example, a network slice that may satisfy a communication requirement is selected based on the traffic category and the URSP rule for communication.

However, traffic categories defined in the URSP rule are all traffic categories indicated by an application. The traffic category is only applicable to classifying data between the application and a network, has a relatively coarse granularity, and cannot meet a performance requirement of the communication system.

### SUMMARY

Embodiments of this application provide a communication method and apparatus, so as to add a terminal device side data stream category based on a traffic category indicated by an application program, to reflect a terminal device side service, thereby improving performance of a communication system.

According to a first aspect, an embodiment of this application provides a communication method. The method may be performed by a terminal device, or may be a chip, chip system, or system on chip in terminal device. An example in which the method is performed by a terminal device is used for description below. The method may include: obtaining a user equipment route selection policy URSP rule, where the URSP rule includes a plurality of traffic categories, and the plurality of traffic categories include one or more terminal device side data stream categories; obtaining first data, where the first data is data processed by a terminal device, determining the terminal device side data stream category associated with the first data based on the traffic category; and transmitting the first data on a session that supports the terminal device side data stream category.

Based on the first aspect, since the terminal device also generates a data stream, that is, the terminal device not only transmits data of an application, but also transmits data generated by the terminal device, a terminal device side service may be reflected by adding the terminal device side data stream category based on a traffic category included in the URSP rule that is indicated by the application, thereby improving performance of the communication system.

In a possible design, the one or more terminal device side data stream categories include one or more of the following: a data stream having a special requirement of a terminal device, a data stream having a special identifier of the terminal device, a data stream having integrated sensing and communication, a semantic data stream, a data stream processed by the terminal device based on different priorities, or a data stream controlled by the terminal device.

Based on the possible design, a plurality of possible designs are provided for the terminal device side data stream category.

In a possible design, the first data includes one or more of the following: data generated by the terminal device, data obtained after the terminal device processes third-party data, and data obtained after the terminal device processes operating system OS data.

Based on the possible design, a plurality of feasible schemes are provided for the first data.

In a possible design, each traffic category includes a plurality of subcategories.

Based on the possible design, since a granularity of the traffic category is relatively coarse, each traffic category may be further subdivided into a plurality of subcategories.

In a possible design, the matching the first data with the URSP rule based on the terminal device side data stream category associated with the first data includes: determining, from the URSP rule based on the terminal device side data stream category associated with the first data, network slice information associated with the first data.

Based on the possible design, the network slice information associated with the first data may be determined according to the URSP rule, so as to implement transmission of the first data through the network slice, thereby satisfying a transmission requirement of the first data and improving system performance.

According to a second aspect, an embodiment of this application provides a communication method. The method may be performed by a policy control network element, or may be performed by a chip, a chip system, or a system on chip in the policy control network element. An example in which the method is performed by a policy control network element is used for description below. The method may include: generating a user equipment route selection policy URSP rule, and sending the URSP rule to a terminal device, where the URSP rule includes a plurality of traffic categories, and the plurality of traffic categories include one or more terminal device side data stream categories.

Based on the second aspect, since the terminal device also generates a data stream, that is, the terminal device not only transmits data of an application, but also transmits data generated by the terminal device, a terminal device side service may be reflected by adding the terminal device side data stream category based on a traffic category included in the URSP rule that is indicated by the application, thereby improving performance of the communication system.

In a possible design, the one or more terminal device side data stream categories include one or more of the following: a data stream having a special requirement of a terminal device, a data stream having a special identifier of the terminal device, a data stream having integrated sensing and communication, a semantic data stream, a data stream processed by the terminal device based on different priorities, or a data stream controlled by the terminal device.

Based on the possible design, a plurality of possible designs are provided for the terminal device side data stream category.

In a possible design, each traffic category includes a plurality of subcategories.

Based on the possible design, since a granularity of the traffic category is relatively coarse, each traffic category may be further subdivided into a plurality of subcategories.

According to a third aspect, an embodiment of this application provides a communication apparatus. The communication apparatus may be applied to the terminal device in the first aspect or the possible design of the first aspect, to implement a function performed by the foregoing terminal device. The communication apparatus may be the terminal device, or may be a chip, a chip system, a system on chip, or the like of the terminal device. The communication apparatus may perform the function performed by the terminal device through hardware, or may perform corresponding software implementation through hardware. The hardware or software includes one or more modules corresponding to the foregoing functions, such as a transceiving module and a processing module. The transceiving module is configured to obtain a user equipment route selection policy URSP rule, where the URSP rule includes a plurality of traffic categories, and the plurality of traffic categories include one or more terminal device side data stream categories. The transceiving module is further configured to obtain first data, where the first data is data processed by a terminal device. The processing module is configured to determine a terminal device side data stream category associated with the first data based on the traffic category. The transceiving module is further configured to transmit the first data on a session that supports the terminal device side data stream category.

In a possible design, the one or more terminal device side data stream categories include one or more of the following: a data stream having a special requirement of a terminal device, a data stream having a special identifier of the terminal device, a data stream having integrated sensing and communication, a semantic data stream, a data stream processed by the terminal device based on different priorities, or a data stream controlled by the terminal device.

In a possible design, the first data includes one or more of the following: data generated by the terminal device, data obtained after the terminal device processes third-party data, and data obtained after the terminal device processes operating system OS data.

In a possible design, each traffic category includes a plurality of subcategories.

In a possible design, the processing module is further configured to determine, from the URSP rule based on the terminal device side data stream category associated with the first data, network slice information associated with the first data.

It should be noted that for a specific implementation of the communication apparatus in the third aspect, reference may be made to a behavior function of the terminal device in the communication method provided in the foregoing first aspect or any possible design of the first aspect, and details are not described.

According to a fourth aspect, an embodiment of this application provides a communication apparatus. The communication apparatus may be applied to the policy control network element in the foregoing second aspect or the possible design of the second aspect, to implement a function performed by the foregoing policy control network element. The communication apparatus may be the policy control network element, or may be a chip, a system on chip, or the like of the policy control network element. The communication apparatus may perform, through hardware, the function performed by the policy control network element, or may perform corresponding software implementation through hardware. The hardware or software includes one or more modules corresponding to the foregoing functions, such as a transceiving module and a processing module. The processing module is configured to generate a user equipment route selection policy URSP rule, and the transceiving module is configured to send the URSP rule to a terminal device, where the URSP rule includes a plurality of traffic categories, and the plurality of traffic categories include one or more terminal device side data stream categories.

In a possible design, the one or more terminal device side data stream categories include one or more of the following: a data stream having a special requirement of a terminal device, a data stream having a special identifier of the terminal device, a data stream having integrated sensing and communication, a semantic data stream, a data stream processed by the terminal device based on different priorities, or a data stream controlled by the terminal device.

In a possible design, each traffic category includes a plurality of subcategories.

It should be noted that for a specific implementation of the communication apparatus according to the fourth aspect, reference may be made to a behavior function of the policy control network element in the communication method provided in the foregoing second aspect or any possible design of the second aspect, and details are not described.

According to a fifth aspect, an embodiment of this application provides a communication apparatus. The communication apparatus includes one or more processors. The one or more processors are configured to run a computer program or instruction, the one or more processors, when executing the computer instruction or instruction, causing the communication apparatus to perform the communication method according to the first aspect or any possible design of the first aspect, or perform the communication method according to the second aspect or any possible design of the second aspect.

In a possible design, the communication apparatus further includes one or more memories. The one or more memories are coupled to one or more processors, and the one or more memories are configured to store the foregoing computer program or instruction. In a possible implementation, the memory is located outside the communication apparatus. In another possible implementation, the memory is located inside the communication apparatus. In this embodiment of this application, the processor and the memory may alternatively be integrated into one device. In other words, the processor and the memory may be further integrated together. In a possible implementation, the communication apparatus further includes a transceiver. The transceiver is configured to receive information or send information.

In a possible design, the communication apparatus further includes one or more communication interfaces. The one or more communication interfaces are coupled to one or more processors. The one or more communication interfaces are configured to communicate with another module except the communication apparatus.

According to a sixth aspect, a communication apparatus is provided. The communication apparatus includes an input/output interface and a logic circuit. The input/output interface is configured to input and/or output information. The logic circuit is configured to perform the communication method according to the first aspect or any possible design of the first aspect, or perform the communication method according to the second aspect or any possible design of the second aspect, to process and/or generate information based on information.

According to a seventh aspect, a computer-readable storage medium is provided, storing a computer instruction or program, the computer instruction or program, when executed on a computer, causing the communication method according to the first aspect or any possible design of the first aspect to be performed, or the communication method according to the second aspect or any possible design of the second aspect to be performed.

According to an eighth aspect, a computer program product including a computer instruction is provided, the computer program product, when run on a computer, causing the communication method according to the first aspect or any possible design of the first aspect to be performed, or the communication method according to the second aspect or any possible design of the second aspect to be performed.

According to a ninth aspect, an embodiment of this application provides a computer program, the computer program, when run on a computer, causing the communication method according to the first aspect or any possible design of the first aspect to be performed, or the communication method according to the second aspect or any possible design of the second aspect to be performed.

For technical effects brought by any one of the design methods in the fifth to the ninth aspect, reference may be made to the technical effect brought by any one possible design in the foregoing first aspect, or reference may be made to the technical effect brought by any one possible design in the foregoing second aspect. Details are not described.

According to a tenth aspect, a communication system is provided. The communication system includes the communication apparatus according to the third aspect or any one possible design of the third aspect, and the communication apparatus according to the fourth aspect or any one possible design of the fourth aspect.

### BRIEF DESCRIPTION OF DRAWINGS

FIG. 1 is a schematic diagram of a communication system according to an embodiment of this application;
FIG. 2 is a schematic diagram of composition of a communication apparatus according to an embodiment of this application;
FIG. 3 is a flowchart of a communication method according to an embodiment of this application;
FIG. 4 is a schematic diagram of a frame structure of a URSP rule according to an embodiment of this application;
FIG. 5 is a flowchart of a communication method according to an embodiment of this application;
FIG. 6 is a structure diagram of a communication apparatus according to an embodiment of this application; and
FIG. 7 is a schematic diagram of a communication apparatus according to an embodiment of this application.

### DESCRIPTION OF EMBODIMENTS

Before embodiments of this application are described, technical terms involving in embodiments of this application are described.

**Network slice:** With the development of mobile communication technologies, various new services and application scenarios continuously emerge, and a large quantity of devices constantly access a network. These devices may belong to different industrial fields, and have various requirements for mobility, security, delay, reliability, and even a charge mode of the network. If a single network is used to carry these services following a construction idea of a conventional network, it is very difficult to satisfy greatly different service requirements at the same time. For operators, it is a costly and inefficient investment, and for users, the users cannot obtain high-quality services that meet specific requirements. In view of this, it is proposed that a customized network service may be provided for a user through an end-to-end network slice. Through flexible allocation of network resources and networking as needed, a plurality of network slices having different characteristics that are isolated from each other are virtually created on a same set of physical facilities. Alternatively, it is described that a physical network is abstractly divided into a plurality of network slices. Each network slice forms an end-to-end logical network, which is logically isolated from each other, so as to provide targeted services for users and satisfy service requirements of various communication services. The network slice may also be referred to as a slice, a logical subnet, or the like, and is not limited thereto.

With introduction of network slice technologies, operators can provide network capabilities with different functional characteristics, and provide "exclusive" networks for users with different service requirements, to ensure superior service levels and satisfy different service requirements. The users can also use cooler application products to further stimulate development of new industry application through blue ocean. Finally, objectives of improving network resource utilization efficiency, optimizing network construction investment of an operator, and constructing a flexible and agile communication network are achieved.

For example, a characteristic that a network slice may satisfy a service requirement is described by using the following cloud game as an example.

The cloud game is based on a real-time audio/video streaming technology. A server sends a real-time audio/video stream to a client. The client sends a control instruction stream to the server based on the received audio/video stream. The server applies the received control instruction stream to a game. The entire loop involves: processes such as server game rendering, audio and video coding, network transmission, and client audio and video decoding and rendering. These processes are all time-consuming to some extent, and network transmission is a factor that has the greatest impact on user experience.

If a conventional fourth generation (4^{th} generation, 4G) mobile communication network or a wireless fidelity (wireless fidelity, Wi-Fi) network is used, in a case that the network is normal, a response delay of the cloud game fluctuates approximately in a range of 50 ms to 140 ms. For some games having a relatively high requirement on operation response delay (for example: an action game, a fighting game, a multiplayer online battle arena (multiplayer online battle arena, MOBA) game, a first-person shooting game, and a racing game), the games still have a significant gap in experience compared to local games, and the operation response delay needs to be further reduced. In addition, due to a special nature of a head-mounted display of a virtual reality (virtual reality, VR) device, a relatively long delay may cause motion sickness (motion sickness). Therefore, the delay needs to be controlled within 20 ms to effectively control a rejection reaction. In other words, a special service scenario of a cloud game imposes a higher requirement for a network: low delay, high bandwidth, no jitter, or small jitter.

Therefore, based on the foregoing descriptions of the network slice, a dedicated network slice may be deployed for the cloud game. For example, a network slice having a low latency, a high bandwidth, no jitter, or a small jitter is deployed for the cloud game, to satisfy a service requirement of the cloud game and improve user experience.

**User equipment route selection policy (user equipment route selection policy, URSP) rule:** It is a core rule for network slice configuration and management for a terminal device, acts on the terminal device in a network slice service process, and is used to instruct the terminal device to transmit service data through a corresponding network slice based on a service feature.

During service transmission, the terminal device may determine a traffic category of to-be-transmitted data based on the to-be-transmitted data, to match an appropriate URSP rule for communication. For example, a network slice that may satisfy a communication requirement is selected based on the traffic category and the URSP rule for communication.

However, traffic categories defined in the URSP rule are all traffic categories indicated by an application. The traffic category is only applicable to classifying data between the application and a network, has a relatively coarse granularity, and cannot meet a performance requirement of the communication system.

To resolve the foregoing problem, an embodiment of this application provides a communication method. In the method, a terminal device may obtain a URSP rule. The URSP rule includes a plurality of traffic categories. The plurality of traffic categories include one or more terminal device side data stream categories. The terminal device may further obtain first data. The first data is data processed by a terminal device. The terminal device determines a terminal device side data stream category associated with the first data based on the traffic category, and matches the first data with the URSP rule based on the terminal device side data stream category associated with the first data.

In this embodiment of this application, since the terminal device also generates a data stream, that is, the terminal device not only transmits data of an application, but also transmits data generated by the terminal device, a terminal device side service may be reflected by adding the terminal device side data stream category based on a traffic category included in the URSP rule that is indicated by the application, thereby improving performance of the communication system.

Implementations of embodiments of this application are described in detail with reference to the accompanying drawings of the specification.

The communication method provided in embodiments of this application may be applied to any communication system including a network slice. The communication system may be a third generation partnership project (third generation partnership project, 3GPP) communication system, for example, a long term evolution (long term evolution, LTE) system, or may be a fifth generation (5th-generation, 5G) mobile communication system, a new radio (new radio, NR) communication system, or a new radio vehicle to everything (vehicle to everything, NR V2X) system, and may be further applied to a system of an LTE and a 5G hybrid network, or a non-terrestrial communication network (non-terrestrial network, NTN) system, a device-to-device (device-to-device, D2D) communication system, a machine to machine (machine to machine, M2M) communication system, the internet of things (internet of things, IoT), and another next generation communication system, for example, a future communication system such as 6G, or may be a non-3GPP communication system. This is not limited.

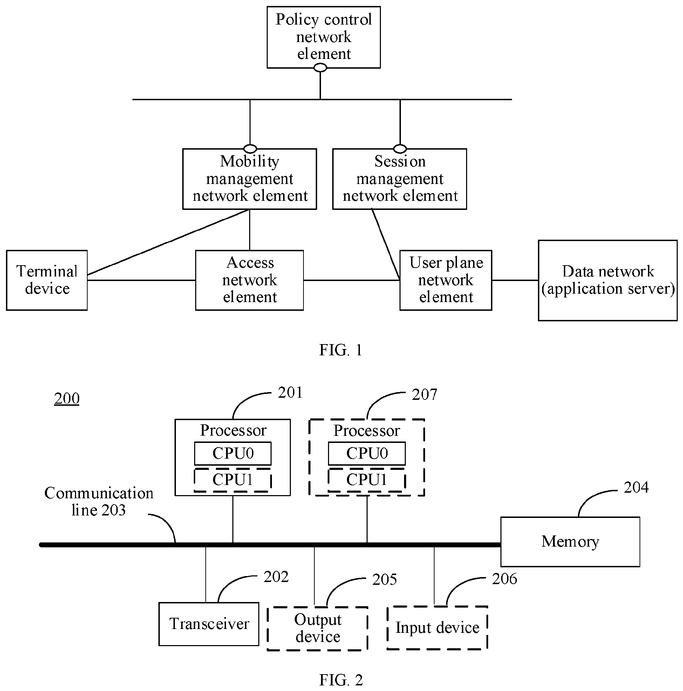

The communication system provided in embodiments of this application is described by using FIG. 1 as an example.

FIG. 1 is a schematic diagram of a communication system according to an embodiment of this application. As shown in FIG. 1, the communication system may include one or more terminal devices, an access network element, a core network element, and a data network (data network, DN). The core network element may include network elements such as a mobility management network element, a session management network element, and a policy control network element.

After accessing a network, a terminal device may establish a protocol data unit (protocol data unit, PDU) session, access an external DN through the PDU session, and interact with an application server deployed in the DN.

The terminal device in FIG. 1 may be located within cell coverage of an access network element. The terminal device may perform air interface communication with the access network element through an uplink (uplink, UL) or a downlink (downlink, DL). For example, the terminal device may send uplink data to the access network element through a physical uplink shared channel (physical uplink shared channel, PUSCH) in an uplink direction; and the access network element may send downlink data to the terminal device through a physical downlink shared channel (physical downlink shared channel, PDSCH) in a downlink direction. The terminal device may also communicate with the core network element through a particular interface. For example, the terminal device may communicate with the mobility management network element in the core network element through an interface N1.

The terminal device in FIG. 1 may be a device having wireless receiving and sending functions or may be arranged in a chip or a chip system of the device, may allow a user to access a network, and is a device configured to provide voice and/or data connectivity for the user. The terminal device may also be referred to as a user equipment (user equipment, UE), a subscriber unit (subscriber unit), a terminal (terminal), a mobile station (mobile station, MS), a mobile terminal (mobile terminal, MT), or the like.

For example, the terminal device in FIG. 1 may be a cellular phone (cellular phone), a smart phone (smart phone), a wireless data card, a mobile phone (mobile phone), a personal digital assistant (personal digital assistant, PDA) computer, a tablet computer, a computer with wireless receiving and sending functions, a wireless modem (modem), a handheld device (handset), a laptop computer (laptop computer), a smart speaker, a train detector, a gas station sensor, or the like. The terminal device may further be a VR terminal, an augmented reality (augmented reality, AR) terminal, a wireless terminal in industrial control, a wireless terminal in self-driving, a wireless terminal in telemedicine, a wireless terminal in a smart grid, a wireless terminal in transportation safety, a wireless terminal in a smart city (smart city), a wireless terminal in a smart home (smart home), a machine type communication (machine type communication, MTC) terminal, an on-board terminal, a vehicle with a vehicle-to-vehicle (vehicle-to-vehicle, V2V) communication capability, an intelligent connected vehicle, an unmanned aerial vehicle with a UAV to UAV (UAV to UAV, U2U) communication capability, and the like. This is not limited.

The access network element in FIG. 1 may be any device deployed in an access network that can perform wireless communication with a terminal device, and may be further arranged in a chip or a chip system of the foregoing device, which is mainly configured to implement functions such as a wireless physical control function, resource scheduling, radio resource management, radio access control, and mobility management. Specifically, the access network element may be a device that supports wired access, or may be a device that supports wireless access.

For example, the access network element may be an access network (access network, AN)/radio access network (RAN) device, and includes a plurality of AN/RAN nodes. The AN/RAN node may be: an access point (access point, AP), a base station (nodeB, NB), a macro base station, a micro cell (or described as a small station), a Picocell, a relay station, an enhanced base station (enhance nodeB, eNB), a next generation eNB (next generation eNB, ng-eNB), a next generation base station (next generation nodeB, gNB), a base station in a future mobile communication system, a transmission reception point (transmission reception point, TRP), a transmission point (transmission point, TP), a transmission measurement function (transmission measurement function, TMF), a wearable device, an on-board device, some other access node, or the like. This is not limited.

The mobility management network element in FIG. 1 is mainly responsible for tasks such as access authentication and mobility management of the terminal device, and signaling interaction between function network elements, for example, management of a registration status of a user, a connection status of the user, registration and access to a network of the user, tracking area update, user authentication for cell switching, key security, and the like.

The session management network element in FIG. 1 may be referred to as a session management function, or a multicast/groupcast service management function, or a multicast session management network element, or the like. This is not limited. The session management network element is mainly configured to implement a user plane transmission logic channel, for example, session management functions such as establishment, release, and modification of a PDU session.

The policy control network element in FIG. 1 may be configured to provide a policy for a mobility management network element, a session management network element, and a terminal device, for example, a URSP policy and a quality of service (quality of service, QoS) policy.

The DN in FIG. 1 may be an operator network that provides a data transmission service for a user. An application server (application server, AS) may be deployed in the DN, and the application server may provide a data transmission service for a user.

It should be noted that the terminal device, the access network element, and the core network element in embodiments of this application may all be one or more chips, or may be a system on chip (system on chip, SOC). FIG. 1 is merely an exemplary drawing, and a quantity of devices included therein is not limited. In addition, besides the device shown in FIG. 1, the communication system may further include another device. A name of each devices and a name of each link in FIG. 1 are not limited. In addition to the names shown in FIG. 1, each device and each link may be further named other names. In addition to the network element shown in FIG. 1, the network shown in FIG. 1 may further include a user plane network element, an application function network element, a network storage network element, a network slice selection network element, a network warehouse network element, an authentication service network element, a network data analysis network element, a network presentation network element, and the like. This is not limited.

For example, an example in which the communication system shown in FIG. 1 is a 5G communication system is used. A network element or an entity corresponding to the foregoing mobility management network element may be an access and mobility management function (access and mobility management function, AMF) in the 5G communication system, a network element or an entity corresponding to the session management network element may be a session management function (session management function, SMF) in the 5G communication system, and the policy control network element may be a policy control function (policy control function, PCF) in the 5G communication system.

In a specific implementation, as shown in FIG. 1, each terminal device, access network element, and core network element may have a composition structure shown in FIG. 2, or include a component shown in FIG. 2. FIG. 2 is a schematic diagram of composition of a communication apparatus 200 according to an embodiment of this application. The communication apparatus 200 may be a terminal device or a chip or a system on chip in the terminal device, or may be an access network element or a chip or a system on chip in the access network element, or may be a core network element or a chip or a system on chip in the core network element. As shown in FIG. 2, the communication apparatus 200 includes a processor 201, a transceiver 202, and a communication line 203.

Further, the communication apparatus 200 may further include a memory 204. The processor 201, the memory 204, and the transceiver 202 may be connected through the communication line 203.

The processor 201 is a central processing unit (central processing unit, CPU), a general-purpose processor, a network processor (network processor, NP), a digital signal processor (digital signal processing, DSP), a microprocessor, a microcontroller, a programmable logic device (programmable logic device, PLD), or any combination thereof. The processor 201 may further be another apparatus having a processing function, for example, a circuit, a device, or a software module. This is not limited.

The transceiver 202 is configured to communicate with another device or another communication network. The another communication network may be an Ethernet, a radio access network (radio access network, RAN), a wireless local area network (wireless local area networks, WLAN), or the like. The transceiver 202 may be a module, a circuit, a transceiver, or any apparatus capable of implementing communication.

The communication line 203 is configured to transfer information between various components included in the communication apparatus 200.

The memory 204 is configured to store an instruction. The instruction may be a computer program.

The memory 204 may be a read-only memory (read-only memory, ROM) or another type of static storage device that may store static information and/or an instruction, or may be a random access memory (random access memory, RAM) or another type of dynamic storage device that may store information and/or an instruction, and may further be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium, or another magnetic storage device. This is not limited.

It should be pointed out that the memory 204 may exist independently of the processor 201, or may be integrated with the processor 201. The memory 204 may be configured to store an instruction or program code or some data, or the like. The memory 204 may be located in the communication apparatus 200, or may be located outside the communication apparatus 200. This is not limited. The processor 201 is configured to execute the instruction stored in the memory 204, to implement the communication method provided in the following embodiments of this application.

In an example, the processor 201 may include one or more CPUs, for example, a CPU0 and a CPU1 in FIG. 2.

In an optional implementation, the communication apparatus 200 includes a plurality of processors, for example, in addition to the processor 201 in FIG. 2, may further include a processor 207.

In an optional implementation, the communication apparatus 200 further includes an output device 205 and an input device 206. For example, the input device 206 is a device such as a keyboard, a mouse, a microphone, or a joystick, and the output device 205 is a device such as a display screen or a speaker (speaker).

It should be pointed out that the communication apparatus 200 may be a desktop computer, a portable computer, a network server, a mobile phone, a tablet computer, a wireless terminal, an embedded device, a chip system, or a device having a similar structure in FIG. 2. In addition, the composition structure shown in FIG. 2 does not constitute a limitation on the communication apparatus. In addition to the component shown in FIG. 2, the communication apparatus may include more or fewer components than those shown in the figure, or some merged components, or different component arrangements.

In this embodiment of this application, the chip system may include a chip, or may include a chip and another discrete component.

In addition, the actions, terms, and the like involved in embodiments of this application may be mutually referenced. This is not limited. In embodiments of this application, a name of a message exchanged between devices, a name of a parameter in the message, and the like are merely examples. Another name may also be used in a specific implementation. This is not limited.

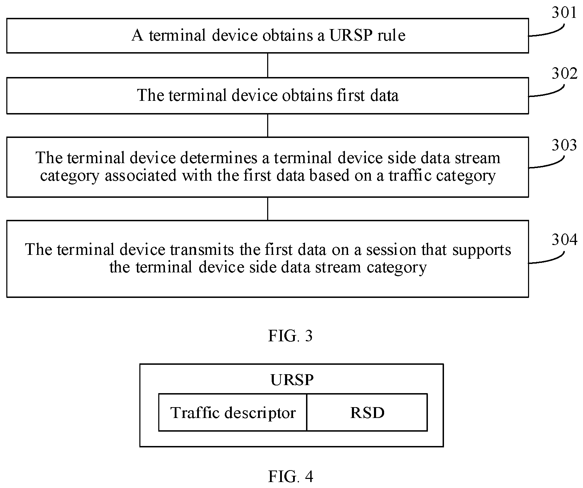

With reference to the communication system shown in FIG. 1, a communication method provided in an embodiment of this application is described with reference to the following FIG. 3. The terminal device may be any terminal device in the communication system shown in FIG. 1, the access network element may be a service access network element of the terminal device, or it is described that the terminal device belongs to an access network element, and the policy control network element may be any policy control network element in the communication system shown in FIG. 1. The terminal device, the access network element, and the policy control network element described in the following embodiments may all have the components shown in FIG. 2. Processing performed by a single execution subject (the terminal device, the access network element, or the policy control network element) shown in embodiments of this application may also be divided into a plurality of execution subjects, and these execution subjects may be logically and/or physically separated. This is not limited.

FIG. 3 is a flowchart of a communication method according to an embodiment of this application. As shown in FIG. 3, the method may include the following steps:

Step 301: A terminal device obtains a URSP rule.

The URSP rule may include a plurality of traffic categories (traffic category), and the plurality of traffic categories may include one or more terminal device side data stream categories. The one or more terminal device side data stream categories help increase management and control of data of a terminal device side and a data stream from an application layer by the terminal device side.

Optionally, the URSP rule may further include network slice information associated with each traffic category, to facilitate transmission of data of different traffic categories on different network slices, thereby improving communication performance.

For example, the one or more terminal device side data stream categories include one or more of the following: a data stream having a special requirement of a terminal device, a data stream having a special identifier of the terminal device, a data stream having integrated sensing and communication, a semantic data stream, a data stream processed by the terminal device based on different priorities, or a data stream controlled by the terminal device.

For a data stream having a special requirement on a terminal, the special requirement may be based on a pre-configured communication requirement. For example, the data stream having a special requirement on the terminal may be a data stream such as an emergency data stream or a satellite communication data stream. This is not limited thereto.

For a data stream having a special identifier of a terminal device, the special identifier may be used to perform collaboration between terminal devices. For example, the special identifier may be a terminal device manufacturer identifier, or may be an operator identifier, or may be an operating system identifier, or the like. This is not limited.

The data stream having integrated sensing and communication may be a data stream used to perform positioning and communication by the terminal device.

The semantic data stream may be data obtained after a terminal device performs artificial intelligence (artificial intelligence, AI) processing on data, and is transmitted as semantic information.

For data streams processed by the terminal device based on different priorities, the terminal device may determine a priority of each data stream based on a delay requirement, a reliability requirement, and the like, and process the data stream based on the priority thereof. For example, the data stream processed by the terminal device based on different priorities may be red envelope grabbing data, game data, and the like. This is not limited.

The data stream controlled by the terminal device may be used to better coordinate with a network side, to help the terminal device save power. For example, the data stream controlled by the terminal device may be a data stream that unifies heartbeat messages of various applications, and the data stream does not belong to any application.

Optionally, as shown in the following Table 1, the traffic category in the URSP rule may further include a plurality of traffic categories indicated by the application, such as internet protocol multimedia subsystem (IP multimedia subsystem, IMS) traffic, network traffic, a real-time uplink stream, vehicle communication, and real-time interaction traffic. This is not limited.

**Table 1**

| Traffic category | Definition | Subdivision of each category |
|---|---|---|
| IMS traffic | IMS voice + video includes voice on an IP network, a video call, and multimedia communication. Voice, video, and short messages through the IMS DNN, and RCS (rich communication services) are all included in this traffic category | 1, 2, and 3 subcategories |
| Network traffic | Network data traffic having wide availability but no strict requirement for delay or a data rate | 1, 2, and 3 subcategories |
| Internet of things type traffic (for example, Internet of things and machine-to-machine type traffic) | Low data rate of an IoT device (a single-purpose device), and a specific IoT device may also need low delay | 1, 2, and 3 subcategories |
| Real-time uplink stream (for example, an on-demand uplink stream) | The on-demand uplink stream is characterized by uplink high data rate content and low delay, is sent from a source in a continuous manner, and has little or no intermediate storage in a network element | 1, 2, and 3 subcategories |
| Vehicle communication | The vehicle communication, that is, vehicle-to-infrastructure, vehicle-to-network, vehicle-to-vehicle, vehicle-to-pedestrian, vehicle-to-device, vehicle-to-power grid, has characteristics of low delay, high reliability, and high availability | 1, 2, and 3 subcategories |
| Real-time interaction traffic | The real-time interaction traffic is characterized by a bidirectional variable data rate and a low delay requirement, such as a game and AR/VR | 1, 2, and 3 subcategories |
| Data stream having a special requirement on a terminal device | Emergency message data, or satellite communication data stream | 1, 2, and 3 subcategories |
| Data stream having a special identifier of a terminal device | Data stream with mutual assistance between a manufacturer device and a manufacturer device | 1, 2, and 3 subcategories |
| Data stream having integrated sensing and communication | Data stream used for positioning and communication by the terminal device | 1, 2, and 3 subcategories |
| Semantic data stream | Data AI processed data transmitted as processed semantic information | 1, 2, and 3 subcategories |
| Data streams processed by the terminal device based on different priorities | Red envelope grabbing data, game data, and the like | 1, 2, and 3 subcategories |
| Data stream controlled by the terminal device | The data stream of unified heartbeat information does not belong to any APP. This data stream may better cooperate with a network side to help the terminal device save power | 1, 2, and 3 subcategories |

Optionally, since the granularity of the traffic category is relatively coarse, as shown in the foregoing Table 1, each traffic category may be further subdivided into a plurality of subcategories, that is, each traffic category may further include a plurality of subcategories, such as 1, 2, and 3 subcategories.

Optionally, some reserved bits (such as one byte) may further be reserved for each traffic classification in the URSP rule, to facilitate subsequent expansion of the traffic classification.

Optionally, as shown in FIG. 4, the foregoing a plurality of traffic categories may be located in a traffic descriptor field in the URSP rule.

The URSR rule field may include a traffic descriptor field and a route selection descriptor (route selection descriptor, RSD) field.

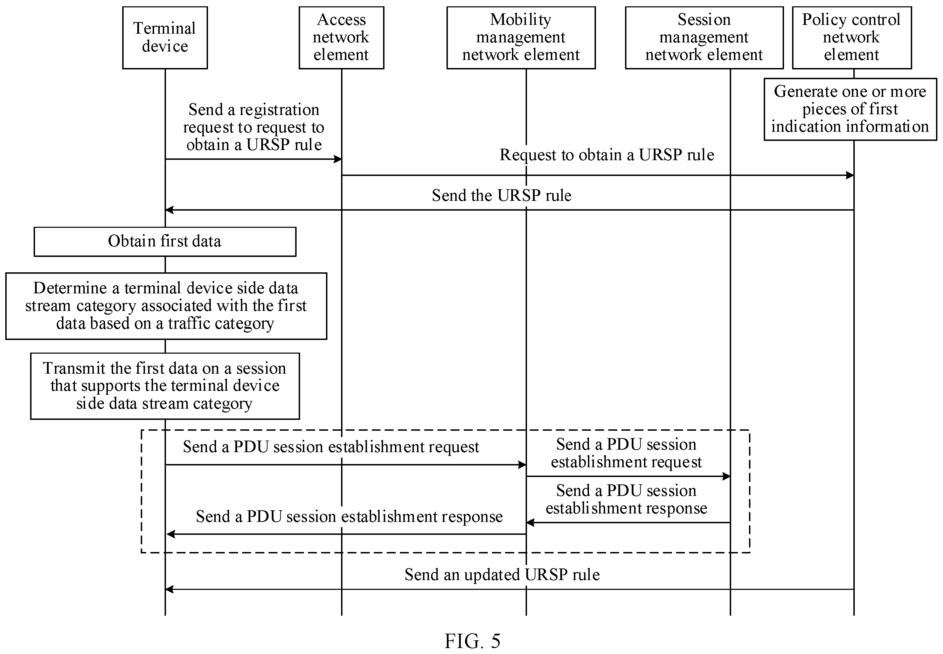

Optionally, as shown in FIG. 5, after establishing a connection with an access network element, the terminal device may send a registration request to the access network element, to request to obtain information about a network slice that may provide a service for the terminal device, and the URSP rule. The registration request may be transmitted to a core network element (such as a mobility management network element or a policy control network element) through the access network element. The mobility management network element determines a network slice that can provide a service for the terminal device, and the policy control network element determines a URSP rule for the terminal device.

Step 302: The terminal device obtains first data.

The first data may be data processed by the terminal device.

Optionally, the first data may be a data stream obtained after a terminal device uses an internal resource to perform special processing on a data packet.

For example, the first data may include one or more of the following: data generated by the terminal device, data obtained after the terminal device processes third-party data, and data obtained after the terminal device processes OS data.

Optionally, different from the foregoing first data that is processed by the terminal device, the terminal device may further obtain third-party data or OS data, and the terminal device may not need to process the third-party data or the OS data. In this case, a traffic category associated with the third-party data or the OS data may be a traffic category indicated by an application.

Step 303: The terminal device determines a terminal device side data stream category associated with the first data based on the traffic category.

The terminal device may determine the terminal device side data stream category associated with the first data based on the traffic category in the URSP rule.

Step 304: The terminal device transmits the first data on a session that supports the terminal device side data stream category.

Optionally, the terminal device may match the first data with the URSP rule based on the terminal device side data stream category associated with the first data.

Optionally, if a session supporting the terminal device side data stream category is already established, the terminal device may transmit the first data on the session that supports the terminal device side data stream category.

Optionally, if the session that supports the terminal device side data stream category has not been established, the terminal device may attempt to establish the session that supports the terminal device side data stream category, and then transmit the first data on the session that supports the terminal device side data stream category.

Optionally, the foregoing session may be a PDU session.

For example, the terminal device may determine, from the URSP rule based on the terminal device side data stream category associated with the first data, network slice information associated with the first data.

Optionally, as shown in FIG. 5, after determining the network slice information, the terminal device may further add the determined network slice information to a PDU session establishment request and send the PDU session establishment request to the access network element, to request to establish a PDU session. The access network element may forward the PDU session establishment request to the mobility management network element. The mobility management network element checks the network slice information in the PDU session establishment request, selects a corresponding session management network element based on a network slice capability status supported by each session management gateway in the network, and forwards the PDU session establishment request to the session management network element. Upon completion of the PDU session establishment process, the session management network element sends a PDU session establishment response to the terminal device through the mobility management network element and the access network element, to complete network slice mapping/PDU session establishment.

Optionally, if the data obtained by the terminal device is third-party data or OS data, the terminal device may also determine a traffic category associated with the third-party data or the OS data, and then match the third-party data or the OS data with the URSP rule based on the associated traffic category, thereby implementing communication.

Based on the method shown in FIG. 3, since the terminal device also generates a data stream, that is, the terminal device not only transmits data of an application, but also transmits data generated by the terminal device, a terminal device side service may be reflected by adding the terminal device side data stream category based on a traffic category included in the URSP rule that is indicated by the application, thereby improving performance of the communication system.

Optionally, as shown in FIG. 5, the policy control network element may further update the URSP rule when the traffic category changes, and send the updated URSP rule to the terminal device.

Optionally, the policy control network element may add the updated URSP rule to a registration command (registration commond) message and send the message to the terminal device.

It may be understood that in embodiments of this application, the execution subject may perform some or all of steps in embodiments of this application. These steps or operations are merely examples. In embodiments of this application, other operations or variations of various operations may be further performed. In addition, the various steps may be performed in different orders presented in embodiments of this application, and it is possible that not all operations in embodiments of this application need to be performed.

The foregoing mainly describes the solutions provided in embodiments of this application from a perspective of interaction between devices. It may be understood that to implement the foregoing functions, each device includes a corresponding hardware structure and/or software module for performing each function. A person skilled in the art should be easily aware that algorithm steps in the examples described with reference to embodiments disclosed in this specification can be implemented in a form of hardware or a combination of hardware and computer software in this application. Whether a function is performed by hardware or computer software driving hardware depends on a particular application and a design constraint of the technical solutions. A person skilled in the art may use different methods to implement the described functions for each specific application, but it is not to be considered that the implementation goes beyond the scope of this application.

In embodiments of this application, each device may be divided into functional modules based on the foregoing method examples. For example, each functional module may be obtained through division for each corresponding function, or two or more functions may be integrated into one processing module. The integrated module may be implemented in a form of hardware, or may be implemented in a form of a software function module. It should be noted that in embodiments of this application, the module division is an example, and is merely logical function division, and additional division manners may exist during actual implementation.

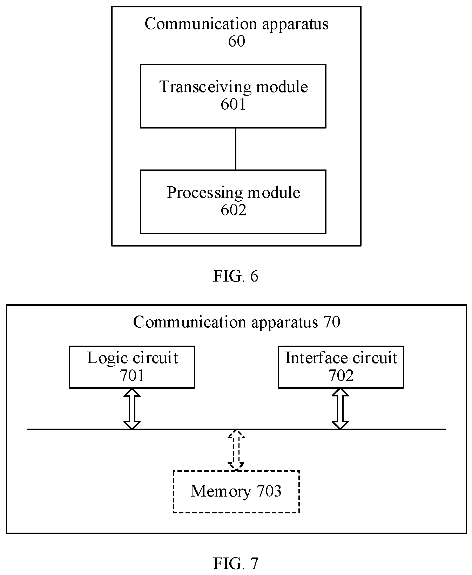

In the case of dividing each functional module through each corresponding function, FIG. 6 shows a communication apparatus 60. The communication apparatus 60 may perform the actions performed by the terminal device or the policy control network element in the methods shown in FIG. 3 to FIG. 5. For all related content of the steps involved in the foregoing method embodiments, reference may be made to functional descriptions of corresponding functional modules. For technical effects that may be obtained, reference may be made to the foregoing method embodiments, and details are not described herein again.

The communication apparatus 60 may include a transceiving module 601 and a processing module 602. For example, the communication apparatus 60 may be a communication device, or may be a chip applied to a communication device, or a combination of devices or components having functions of the foregoing communication apparatus. When the communication apparatus 60 is a communication device, the transceiving module 601 may be a transceiver, and the transceiver may include an antenna, a radio frequency circuit, and the like. The processing module 602 may be a processor (or a processing circuit), for example, a baseband processor, where the baseband processor may include one or more CPUs. When the communication apparatus 60 is a component having the functions of the foregoing communication apparatus, the transceiving module 601 may be a radio frequency unit; and the processing module 602 may be a processor (or a processing circuit), for example, a baseband processor. When the communication apparatus 60 is a chip system, the transceiving module 601 may be an input/output interface of a chip (for example, a baseband chip). The processing module 602 may be a processor (or processing circuit) of a chip system, which may include one or more central processing units. It should be understood that the transceiving module 601 in embodiments of this application may be implemented by a transceiver or a transceiver-related circuit component; and the processing module 602 may be implemented by a processor or a processor-related circuit component (or referred to as a processing circuit).

For example, the transceiving module 601 may be configured to perform all transceiving operations performed by the communication apparatus in embodiments shown in FIG. 3 to FIG. 5, and/or configured to support another process of the technology described in this specification, and the processing module 602 may be configured to perform all operations except transceiving operations performed by the communication apparatus in embodiments shown in FIG. 3 to FIG. 5, and/or configured to support another process of the technology described in this specification.

In still another implementation, the transceiving module 601 in FIG. 6 may be replaced by a transceiver, and the transceiver may integrate a function of the transceiving module 601; and the processing module 602 may be replaced by a processor, and the processor may integrate a function of the processing module 602. Further, the communication apparatus 60 shown in FIG. 6 may further include a memory.

Alternatively, when the processing module 602 is replaced with a processor, and the transceiving module 601 is replaced with a transceiver, the communication apparatus 60 involved in embodiments of this application may further be the communication apparatus 70 shown in FIG. 7. The processor may be a logic circuit 701, and the transceiver may be an interface circuit 702. Further, the communication apparatus 70 shown in FIG. 7 may further include a memory 703.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

An embodiment of this application further provides a computer-readable storage medium. All or some of the processes in the foregoing method embodiments may be implemented by a computer program instructing related hardware. The program may be stored in a computer-readable storage medium. When the program is executed, the processes in the foregoing method embodiments may be included. The computer-readable storage medium may be an internal storage unit of the terminal (including the data transmission terminal and/or the data receiving terminal) in any one of the foregoing embodiments, for example, a hard disk or a memory of the terminal. The foregoing computer-readable storage medium may alternatively be an external storage device of the foregoing terminal, for example, a plug-in hard disk, a smart media card (smart media card, SMC), a secure digital (secure digital, SD) card, a flash card (flash card), or the like equipped on the terminal. Further, the foregoing computer-readable storage medium may further include an internal storage unit of the foregoing terminal and also include an external storage device. The foregoing computer-readable storage medium is configured to store the foregoing computer program and another program and data required by the foregoing terminal. The foregoing computer-readable storage medium may be further configured to temporarily store data that has been outputted or that is to be outputted.

It should be noted that terms "first", "second", and the like in the specification, the claims, and the accompanying drawings of this application are used to distinguish between different objects, rather than being used to describe a specific order. The terms "first" and "second" are used for descriptive purposes only and should not be construed as indicating or implying relative importance or implicitly indicating a quantity of technical features indicated. Therefore, a feature limited by "first" or "second" may explicitly or implicitly include one or more of the features. In the descriptions of embodiments, unless otherwise stated, "a plurality of" means two or more.

In addition, terms "include", "have", and any variant thereof are intended to cover a non-exclusive inclusion. For example, a process, a method, a system, a product, or a device that includes a series of steps or units is not limited to the listed steps or units, and instead, optionally further includes a step or a unit that is not listed, or optionally further includes another step or unit that is intrinsic to the process, the method, the product, or the device.

It should be understood that, in this application, "at least one (item)" means one or more. "A plurality of" means two or more. "At least two (items)" means two or three and more than three. The term "and/or" is used to describe an association relationship between associated objects and represents that three relationships may exist. For example, "A and/or B" may represent the following cases: only A exists, only B exists, and both A and B exist, where A and B may be singular or plural. The character "/" generally indicates an "or" relationship between a preceding associated object and a succeeding associated object. "At least one of the following items (pieces)" or a similar expression thereof refers to any combination of these items, including a single item (piece) or any combination of a plurality of items (pieces). For example, at least one of a, b, or c may represent a, b, c, "a and b", "a and c", "b and c", or "a, b, and c", where a, b, and c may be singular or plural. "When" and "if" both mean that corresponding processing is to be performed in an objective condition, and are not intended to limit time, and are not required to perform a determining action during implementation, and do not mean that there is another limitation.

In embodiments of this application, a term such as "in an example" or "for example" is used to represent giving an example, an illustration, or a description. Any embodiment or design solution described as "in an example" or "for example" in this embodiment of this application should not be explained as being preferable or having more advantages than another embodiment or design solution. To be precise, the terms such as "illustrative" and "for example" are intended to present a related concept in a specific manner to facilitate understanding.

Through the descriptions of the foregoing implementations, a person skilled in the art may clearly understand that, for the purpose of convenient and brief description, only division of the foregoing functional modules is used as an example for description. In an actual application, the foregoing functions may be allocated to and completed by different functional modules as required. In other words, an internal structure of an apparatus is divided into different functional modules to complete all or some of the functions described above.

In the several embodiments provided in this application, it should be understood that the disclosed apparatus and method may be implemented in other manners. For example, the described apparatus embodiment is merely an example. For example, the module or unit division is merely logical function division and may be another division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect coupling or communication connection between the apparatuses or units may be implemented in electronic, mechanical, or other forms.

The units described as separate parts may or may not be physically separate, and a component displayed as a unit may be one physical unit or a plurality of physical units, may be located in one pace, or may be distributed in different places. Some or all of the units may be selected based on actual requirements to achieve the objectives of the solutions of embodiments.

In addition, the functional units in embodiments of this application may be integrated into one processing unit, or each of the units may exist alone physically, or two or more units may be integrated into one unit. The foregoing integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or all or some of the technical solutions may be implemented in a form of a software product. The software product is stored in a storage medium and includes instructions for enabling a device (which may be a single-chip microcomputer, a chip, or the like) or a processor (processor) to perform all or some of the steps of the methods described in embodiments of this application. The foregoing storage medium includes: any medium that may store program code, such as a USB flash drive, a removable hard disk, a ROM, a RAM, a magnetic disk, or an optical disc.

## Claims

1. A communication method, comprising:
obtaining a user equipment route selection policy URSP rule, wherein the URSP rule comprises a plurality of traffic categories, and the plurality of traffic categories comprise one or more terminal device side data stream categories;
obtaining first data, wherein the first data is data processed by a terminal device;
determining a terminal device side data stream category associated with the first data based on the traffic category; and
transmitting the first data on a session that supports the terminal device side data stream category.

2. The method according to claim 1, wherein the one or more terminal device side data stream categories comprise one or more of the following:
a data stream having a special requirement of a terminal device, a data stream having a special identifier of the terminal device, a data stream having integrated sensing and communication, a semantic data stream, a data stream processed by the terminal device based on different priorities, or a data stream controlled by the terminal device.

3. The method according to claim 1 or 2, wherein
the first data comprises one or more of the following: data generated by the terminal device, data obtained after the terminal device processes third-party data, and data obtained after the terminal device processes operating system OS data.

4. The method according to any one of claims 1 to 3, wherein
each of the traffic categories comprises a plurality of subcategories.

5. The method according to any one of claims 1 to 4, wherein the matching the first data with the URSP rule based on the terminal device side data stream category associated with the first data comprises:
determining, from the URSP rule based on the terminal device side data stream category associated with the first data, network slice information associated with the first data.

6. A communication method, comprising:
generating a user equipment route selection policy URSP rule, wherein the URSP rule comprises a plurality of traffic categories, and the plurality of traffic categories comprise one or more terminal device side data stream categories; and
sending the URSP rule to a terminal device.

7. The method according to claim 6, wherein the one or more terminal device side data stream categories comprise one or more of the following:
a data stream having a special requirement of a terminal device, a data stream having a special identifier of the terminal device, a data stream having integrated sensing and communication, a semantic data stream, a data stream processed by the terminal device based on different priorities, or a data stream controlled by the terminal device.

8. The method according to claim 6 or 7, wherein
each of the traffic categories comprises a plurality of subcategories.

9. A communication apparatus, comprising:
a transceiving module, configured to obtain a user equipment route selection policy URSP rule, wherein the URSP rule comprises a plurality of traffic categories, and the plurality of traffic categories comprise one or more terminal device side data stream categories; and
the transceiving module is further configured to obtain first data, wherein the first data is data processed by a terminal device; and
a processing module, configured to determine a terminal device side data stream category associated with the first data based on the traffic category, wherein
the transceiving module is further configured to transmit the first data on a session that supports the terminal device side data stream category.

10. A communication apparatus, comprising:
a processing module, configured to generate a user equipment route selection policy URSP rule, wherein the URSP rule comprises a plurality of traffic categories, and the plurality of traffic categories comprise one or more terminal device side data stream categories; and
a transceiving module, configured to send the URSP rule to a terminal device.

11. A communication apparatus, comprising a processor, wherein the processor is configured to run a computer program or instruction, to enable the communication apparatus to perform the communication method according to any one of claims 1 to 5 or perform the communication method according to any one of claims 6 to 8.

12. A computer-readable storage medium, storing a computer instruction or program, the computer instruction or program, when run on a computer, causing the communication method according to any one of claims 1 to 5 to be performed, or causing the communication method according to any one of claims 6 to 8 to be performed.

13. A computer program product, comprising computer instructions, some or all of the computer instructions, when run on a computer, causing the communication method according to any one of claims 1 to 5 to be performed, or causing the communication method according to any one of claims 6 to 8 to be performed.
